# EUROPEAN PATENT APPLICATION

(11) **EP 3 955 620 A1**
(43) Date of publication of application: **16.02.2022**
(21) Application number: 20788114.5
(22) Date of filing: 09.04.2020
(51) Int. Cl.: H04W 16/14, H04B 17/318, H04B 1/04, H04W 74/08

(54) **USER TERMINAL, WIRELESS COMMUNICATION METHOD, AND BASE STATION**

(30) Priority: 10.04.2019 JP 2019086606
(71) Applicant: NTT DOCOMO, INC., Chiyoda-Ku Tokyo 100-6150 (JP)
(72) Inventor: MURAYAMA, Daisuke, Tokyo 100-6150 (JP); HARADA, Hiroki, Tokyo 100-6150 (JP)
(74) Representative: Hoffmann Eitle
(86) International application number: PCT/JP2020/015996
(87) International publication number: WO 2020/209340

(57) **Abstract**

User terminal includes: a receiving section configured to perform sensing of a channel in a gap of a given order among a plurality of gaps in one transmission opportunity; and a control section configured to determine whether or not to perform transmission after the gap of the given order based on a result of the sensing.

## Description

### Technical Field

The present disclosure relates to user terminal, a radio communication method, and a base station in a next-generation mobile communication system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G plus(+), New Radio (NR), or 3GPP Rel. 15 or later) are also being studied.

In existing LTE systems (for example, Rel. 8 to 12), the specifications have been drafted assuming that exclusive operation is performed in a frequency band licensed to a telecommunications carrier (operator) (also referred to as a licensed band, a licensed carrier, a licensed component carrier (CC), and so on). As the licensed CC, for example, 800 MHz, 1.7 GHz, 2 GHz, etc. are used.

Further, in the existing LTE system (for example, Rel. 13), in order to extend the frequency band, a frequency band different from the above licensed band (also referred to as an unlicensed band, an unlicensed carrier, or an unlicensed CC) is supported. As the unlicensed band, for example, 2.4 GHz band or 5 GHz band in which Wi-Fi (registered trademark) or Bluetooth (registered trademark) can be used is assumed.

Specifically, in Rel. 13, carrier aggregation (CA) that integrates a carrier (CC) in the licensed band and a carrier (CC) in the unlicensed band is supported. The communication performed using the unlicensed band together with the licensed band is called license-assisted access (LAA) .

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In the future radio communication systems (for example, 5G, 5G+, NR, and Rel. 15 or later versions), a transmitting apparatus (for example, a base station in the downlink (DL), user terminal (User Equipment (UE)) in the uplink (UL)) performs listening (also referred to as Listen Before Talk (LBT), Clear Channel Assessment (CCA), carrier sense, channel sensing, channel access procedure, and so on) for confirming the presence or absence of transmission of other apparatuses (for example, base station, UE, Wi-Fi apparatus, and so on) before transmission of data in the unlicensed band.

In order for such a radio communication system to coexist with other systems in the unlicensed band, it is conceivable that the radio communication system complies with a regulation, a requirement, or the like in the unlicensed band.

However, if an operation in the unlicensed band is not clearly determined, there is a risk that appropriate communication cannot be performed in the unlicensed band, for example, an operation in a specific communication situation does not conform to the regulation or utilization efficiency of radio resources is reduced.

Therefore, one of objects of the present disclosure is to provide user terminal, a radio communication method, and a base station for performing appropriate communication in an unlicensed band.

### Solution to Problem

User terminal according to one aspect of the present disclosure includes: a receiving section configured to perform sensing of a channel in a gap of a given order among a plurality of gaps in one transmission opportunity; and a control section configured to determine whether or not to perform transmission after the gap of the given order based on a result of the sensing.

### Advantageous Effects of Invention

According to one aspect of the present disclosure, appropriate communication can be performed in an unlicensed band.

### Brief Description of Drawings

Fig. 1 is a diagram illustrating an example of CSMA/CA with ACK.
Fig. 2 is a diagram illustrating an example of data collision by hidden terminals.
Fig. 3 is a diagram illustrating an example of CSMA/CA with RTS/CTS.
Fig. 4 is a diagram illustrating an example of RTS/CTS in an NR-U system.
Figs. 5A and 5B are diagrams illustrating an example of COT sharing.
Fig. 6 is a diagram illustrating an example of interference with hidden terminals in COT sharing.
Figs. 7A and 7B are diagrams illustrating an example of COT sharing in which a DL node and a UL node are one-to-one.
Figs. 8A and 8B are diagrams illustrating an example of COT sharing in which a DL node to a UL node are one-to-many.
Fig. 9 is a diagram illustrating an example of a schematic configuration of a radio communication system according to one embodiment.
Fig. 10 is a diagram illustrating an example of a configuration of a base station according to one embodiment.
Fig. 11 is a diagram illustrating an example of a configuration of user terminal according to one embodiment.
Fig. 12 is a diagram illustrating an example of a hardware configuration of a base station and user terminal according to one embodiment.

### Description of Embodiments

### <Collision Avoidance Method in Unlicensed Band>

In the unlicensed band (for example, 2.4 GHz band or 5 GHz band), it is assumed that a plurality of systems such as a Wi-Fi system and a system supporting LAA (LAA system) coexist. Therefore, it is necessary to avoid collision of transmission and/or control interference between the plurality of systems.

An NR system (also referred to as, for example, 5G, 5G+, NR, 3GPP Rel. 15 or later, and the like) using an unlicensed band may be referred to as an NR-Unlicensed (U) system, an NR LAA system, or the like. There is a possibility that dual connectivity (DC) between the licensed band and the unlicensed band, stand-alone (SA) of the unlicensed band, or the like is adopted in NR-U.

For example, a Wi-Fi system using an unlicensed band employs Carrier Sense Multiple Access (CSMA)/Collision Avoidance (CA) for the purpose of collision avoidance and/or interference control.

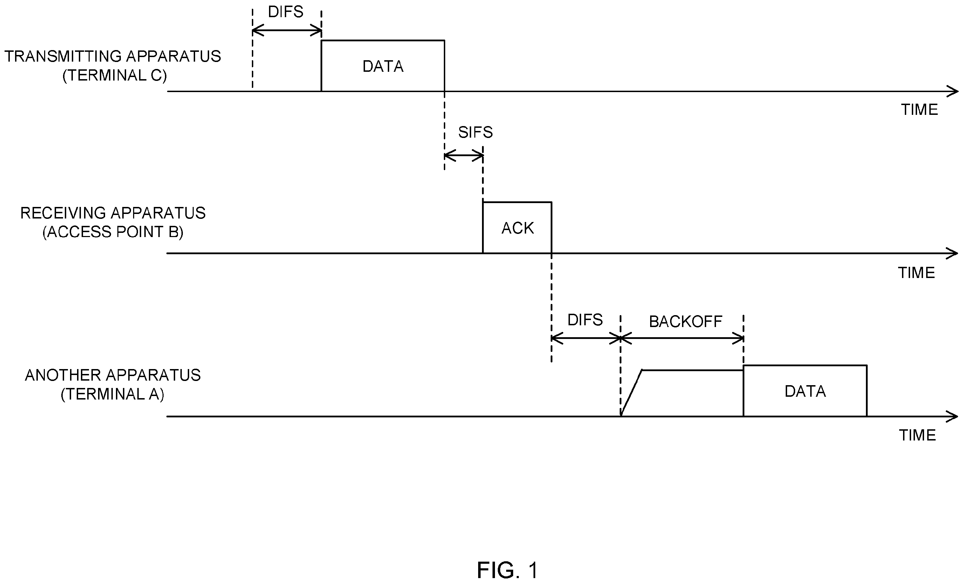

Fig. 1 is a diagram illustrating an example of CSMA/CA. As illustrated in Fig. 1, a radio terminal C (data transmission side) checks a signal on a communication medium (carrier sense), does not start data transmission immediately even when it is determined that there is no signal, and transmits data after waiting for a given time. This waiting time is referred to as distributed access inter frame space (DIFS). An access point B (data reception side) that has received the data returns an acknowledgement (ACK). In order to preferentially transmit the ACK, the ACK can be transmitted only by waiting for a time shorter than the DIFS (short IFS (SIFS)). The radio terminal C (data transmission side) repeats retransmission until the ACK is received. Therefore, the access scheme (first access scheme) illustrated in Fig. 1 is also referred to as CSMA/CA with ACK.

In the Wi-Fi system, for the purpose of collision avoidance and/or interference control, RTS/CTS is employed in which a transmission request (Request to Send (RTS)) is transmitted before transmission, and if the receiving apparatus can receive it, it responds as being receivable (Clear to Send (CTS)). For example, RTS/CTS is effective in avoiding data collisions due to hidden terminals.

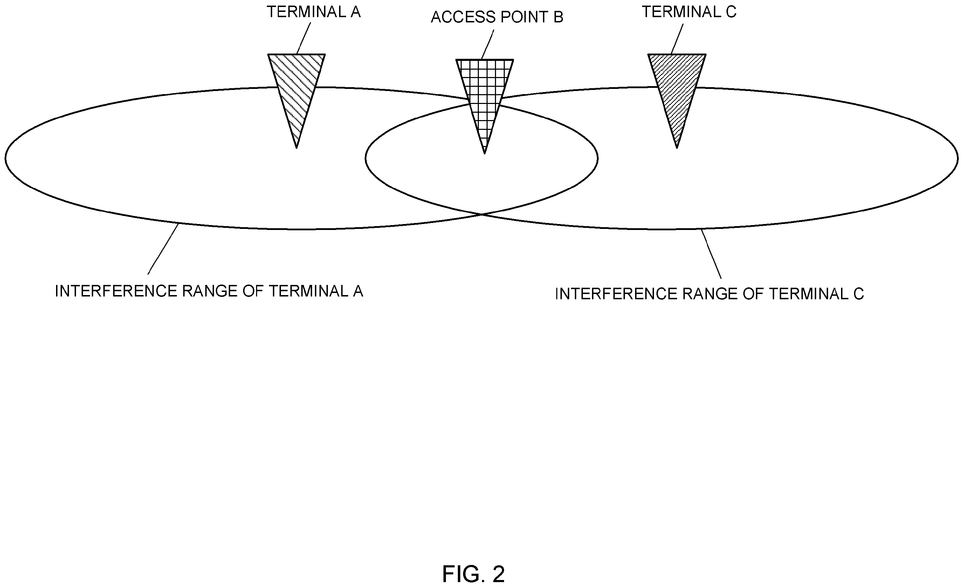

Fig. 2 is a diagram illustrating an example of data collision by hidden terminals. In Fig. 2, since a radio wave of the radio terminal C does not reach a radio terminal A, the radio terminal A cannot detect a transmission signal from the radio terminal C even if carrier sense is performed before transmission. As a result, even if the radio terminal C is performing transmission to the access point B, it is assumed that the radio terminal A also performs transmission to the access point B. In this case, the transmission signals from the radio terminals A and C collide at the access point B, which may reduce the throughput.

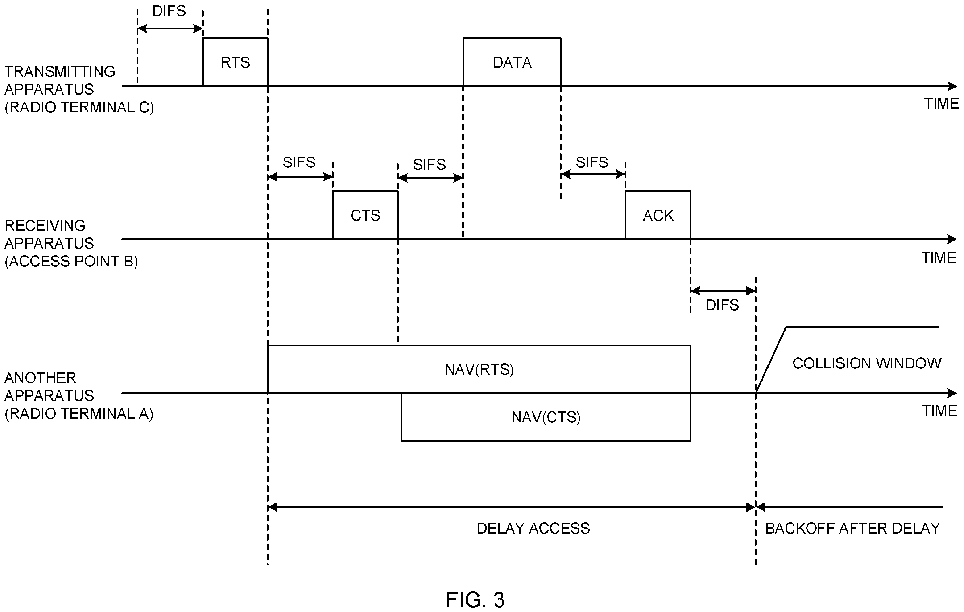

Fig. 3 is a diagram illustrating an example of CSMA/CA with RTS/CTS. As illustrated in Fig. 2, the radio terminal C (transmission side) transmits the RTS when it is confirmed that by carrier sense there is no other transmission signal (idle) in a given time (DIFS) before transmission (in Fig. 1, the RTS does not reach the radio terminal A (another terminal)). The RTS is preferably omni (omnidirectional) transmission. The RTS may be beamformed. Upon receiving the RTS from the radio terminal C, the access point B (reception side) transmits the CTS when it is confirmed by carrier sense that there is no other transmission signal (idle, clear) in a given time (Short Inter Frame Space (SIFS)). The CTS is preferably omni transmission. The RTS may be referred to as a transmission request signal. The CTS may be referred to as a receivable signal.

In Fig. 3, the CTS from the access point B reaches the radio terminal A (another apparatus), so that the radio terminal A detects that communication is performed and postpones the transmission. Since the RTS/CTS packet has a given period (also referred to as Network Allocation Vector (NAV), transmission prohibited period, or the like) written therein, the communication is suspended during the given period (NAV indicated in the RTS "NAV(RTS)", NAV indicated in the CTS "NAV(CTS)").

The radio terminal C that has received the CTS from the access point B confirms that there is no other transmission signal (idle) by carrier sense in the given period (SIFS) before transmission, and then transmits the data (frame). The access point B that has received the data transmits ACK after the given period (SIFS).

In Fig. 3, when the radio terminal A, which is a hidden terminal of the radio terminal C, detects the CTS from the access point B, the transmission is postponed, so that collision of the transmission signals of the radio terminals A and C at the access point B can be avoided.

In LAA of the existing LTE system (for example, Rel. 13), a data transmitting apparatus performs listening (also referred to as LBT, CCA, carrier sense, channel access procedure, and so on) for confirming the presence or absence of transmission of another apparatus (for example, base station, UE, Wi-Fi apparatus, and so on) before transmission of data in the unlicensed band.

The transmitting apparatus may be, for example, a base station (for example, gNodeB, (gNB), transmission/reception point (TRP), network (NW)) in downlink (DL) and may be UE in uplink (UL). Further, the receiving apparatus that receives data from the transmitting apparatus may be, for example, UE in DL and a base station in UL.

In the LAA of the existing LTE system, the transmitting apparatus starts data transmission after a given period (for example, immediately after or during a backoff period) from when it is detected by listening that there is no transmission of another apparatus (idle state, LBT-idle), and does not perform data transmission when it is detected by listening that there is transmission of another apparatus (busy state, LBT-busy). However, even if the transmitting apparatus transmits data based on the result of the listening, as a result of the presence of the hidden terminal, there is a risk that data collision in the receiving apparatus may not be avoided.

For this reason, in the NR-U system, in order to improve the avoidance rate of data collision in the receiving apparatus, supporting of the above RTS/CTS is being considered.

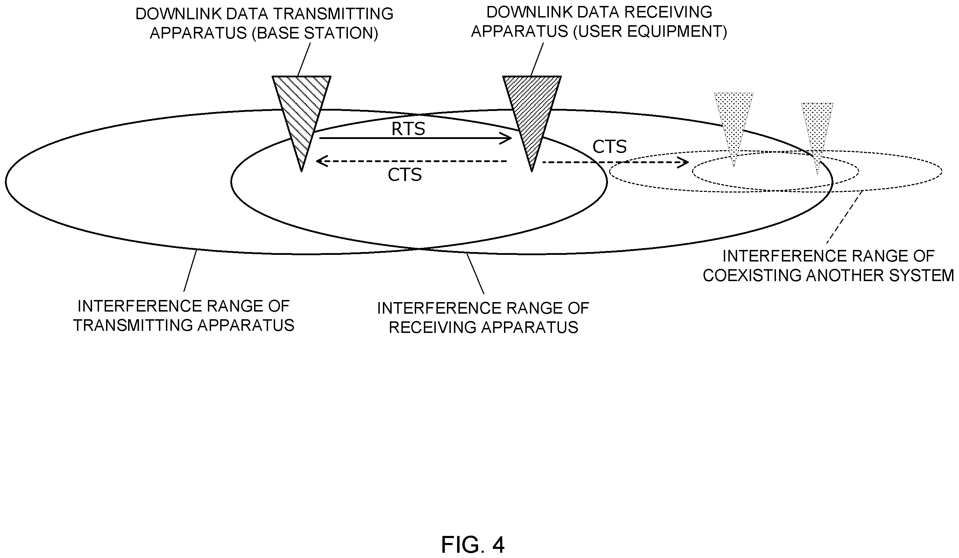

Fig. 4 is a diagram illustrating an example of RTS/CTS in an NR-U system. In the NR-U system that supports RTS/CTS, it is assumed that the transmitting apparatus (base station) transmits the RTS by an unlicensed band carrier (also referred to as an unlicensed carrier, unlicensed CC, LAA Secondary Cell (SCell), and so on) before transmitting the downlink data to the receiving apparatus (UE).

When the uplink unlicensed CC is supported in the NR-U system, it is conceivable that, as illustrated in Fig. 4, the downlink data receiving apparatus (UE) transmits the CTS using the uplink unlicensed CC. An unlicensed CC of Time Division Duplex, unpaired spectrum (TDD) may be used instead of the uplink unlicensed CC.

The NR-U system may perform an operation of carrier aggregation (CA) using the unlicensed CC and the licensed CC, may perform an operation of dual connectivity (DC) using the unlicensed CC and the licensed CC, or may perform an operation of stand-alone (SA) using only the unlicensed CC. The CA, the DC, or the SA may be performed by any one of NR and LTE systems. The DC may be performed by at least two of NR, LTE, and another system.

The UL transmission in the unlicensed CC may be at least one of the PUSCH, the PUCCH, and the SRS.

### <COT Sharing>

In the NR-U system, it is considered to share a transmission opportunity (TxOP) time acquired by a node (base station or UE), that is, a channel occupancy time (COT) between a plurality of nodes. The node may be either the UE or the base station, or may be a node of another system.

As a basic form of COT sharing, downlink and uplink one-to-one communication can be assumed. For example, one-to-one communication by a node A and a node B can be assumed. Alternatively, downlink and uplink one-to-many communication may be assumed as a form of COT sharing.

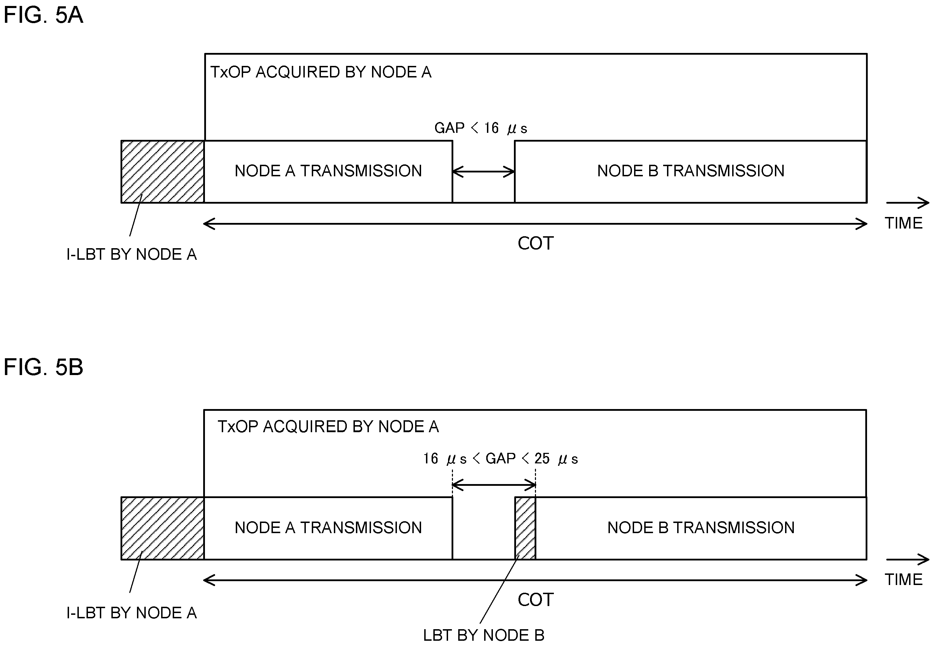

Figs. 5A and 5B are diagrams illustrating an example of COT sharing in an unlicensed CC. When the node A performs LBT in the unlicensed CC and an LBT result is idle, the node A acquires a transmission opportunity (TxOP) having a time length of COT. In this case, the node A performs data transmission in the unlicensed CC. LBT performed immediately before acquisition of a transmission opportunity (TxOP) is also referred to as initial LBT (I-LBT). Within the transmission opportunity (TxOP) acquired by the node A, the remaining period of transmission by the node A may be shared by another node that can receive a signal from the node A.

In COT sharing, when transmission node switching is performed from the node A to another node (for example, node B), a transmission blank period (gap) occurs. When the gap length is 16 [µs] or less (or less than 16 [µs]), no-LBT transmission that does not require LBT before transmission may be allowed within the transmission opportunity (TxOP). In a case where the gap length is larger than 16 [µs] (or 16 [µs] or more), the LBT transmission may be performed within the transmission opportunity (TxOP). The LBT transmission refers to data transmission that requires LBT before transmission and transmits data when the LBT result is idle. Even in a case where the gap length is 16 [µs] or less, the LBT transmission may be performed within the transmission opportunity (TxOP).

In order to realize a gap length (for example, 16 [µs] or less) allowing no-LBT transmission, it is preferable to schedule several data transmissions in the transmission opportunity (TxOP) in advance. For example, when the node A is a base station and the node B is UE, downlink control information indicating scheduling (allocation) of data transmission by the node B may be transmitted during data transmission by the node A. Alternatively, information indicating scheduling of data transmission by the node A and the node B may be transmitted before the transmission opportunity (TxOP).

The four categories described below are defined for LBT in LTE LAA.

- Category 1: Transmission without performing LBT.
- Category 2: Performing carrier sense in a fixed sensing time before transmission and performing transmission when a channel is idle.
- Category 3: Randomly generating a value (random backoff) within a given range before transmission, repeating carrier sense at a fixed sensing slot time, and performing transmission when it can be confirmed that a channel is idle over a slot of the value.
- Category 4: Randomly generating a value (random backoff) within a given range before transmission, repeating carrier sense at a fixed sensing slot time, and performing transmission when it can be confirmed that a channel is idle over a slot of the value. The range of a random backoff value (contention window size) changes according to a communication failure situation due to a collision with communication of another system.

As an LBT regulation, it is being studied to perform LBT according to a length of a gap between two transmissions (a non-transmission period, a period in which received power is a given threshold value or less, or the like).

In the NR-U system, receiver assisted LBT or LBT in LTE LAA may be performed as initial LBT (initial-LBT, I-LBT) for acquiring the TxOP. In this case, the initial LBT is preferably Category 4 LBT in the LTE LAA.

The LBT performed in the transmission opportunity (TxOP) may be a one-shot LBT that performs carrier sense of a short fixed time or Category 2 LBT in the LTE LAA. The one-shot LBT is also referred to as a short LBT. When the cap is 16 [µs] or less, no-LBT transmission may be performed.

In the example illustrated in Fig. 5A, the gap length is shorter than 16 [µs]. When the data transmission by the node A ends within the transmission opportunity (TxOP) acquired by the node A, the node B may perform no-LBT transmission across a gap.

In the example illustrated in Fig. 5B, the gap length is longer than 16 [µs] and shorter than 25 [µs]. When the data transmission by the node A ends within the transmission opportunity (TxOP) acquired by the node A, the node B may perform LBT transmission across a gap.

As described above, downlink and uplink one-to-many communication may be assumed as a form of COT sharing.

It may be supported that one or more transmission node switching points (for example, switching points, gaps) are arranged in a single COT.

For example, in a case where a single transmission node switching point is arranged in a single COT as in Fig. 5A, when the gap is less than 16 µs, transmission (no-LBT) that does not perform LBT before transmission may be supported.

For example, in a case where a single transmission node switching point is arranged in a single COT as in Fig. 5B, Category 2 LBT (one-shot LBT) may be supported when the gap is 16 µs or more and less than 25 µs.

A plurality of transmission node switching points may be included in a single COT. In this case, there is a possibility that interference by a hidden terminal arrives at the node receiving the signal.

At this time, when the rule (no-LBT is used when the gap length is 16 µs or less (or less than 16 µs), and Category 2 LBT (one-shot LBT) is used when the gap length is 16 µs or more (or more than 16 µs) and 25 µs or less (or less than 25 µs)) in Fig. 5 is applied at which transmission node switching point, it is considered that the probability of collision with the interference wave is high.

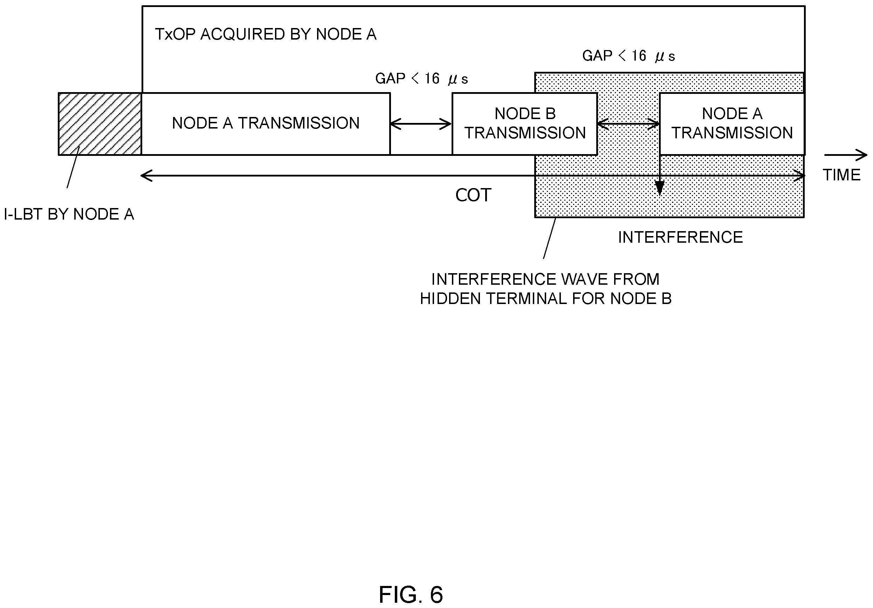

For example, as illustrated in Fig. 6, when two transmission node switching points are arranged in a single COT, the node A performs transmission in the COT, then the node B performs (no-LBT) transmission without performing LBT in a gap of 16 µs or less, and then the node B performs (no-LBT) transmission without performing LBT in a gap of 16 µs or less.

A hidden terminal for the node B may be close to the node A and perform transmission during transmission of the node B. When the node A performs no-LBT transmission after the transmission by the node B, the hidden terminal is interfered by the transmission from the node A.

As described above, when the rule of no-LBT transmission is applied in the switching of the transmission node in the COT, interference with the hidden terminal may occur. Thus, utilization efficiency of radio resources in the unlicensed band decreases, and performance of the NR-U system or another system may decrease.

Therefore, the present inventors have conceived of performing LBT in a gap of a given order among a plurality of gaps in one transmission opportunity.

Hereinafter, embodiments according to the present disclosure will be described in detail with reference to the drawings. Radio communication methods according to the respective embodiments may be applied independently, or may be applied in combination.

In the present disclosure, the frequency, the band, the frequency band, the spectrum, the carrier, the component carrier (CC), the cell, the channel, the subband, and the LBT subband may be replaced with each other.

In the present disclosure, the listening, Listen Before Talk (LBT), Clear Channel Assessment (CCA), the carrier sense, the sensing, the channel sensing, or the channel access procedure may be replaced with each other.

In the present disclosure, the NR-U target frequency, the unlicensed band, the unlicensed spectrum, the LAA SCell, the LAA cell, the primary cell (Primary Cell: PCell, Primary Secondary Cell: PSCell, Special Cell: SpCell), the secondary cell (SCell), and the frequency (band) to which channel sensing is applied may be replaced with each other.

In the present disclosure, the NR target frequency, the licensed band, the licensed spectrum, the PCell, the PSCell, the SpCell, the SCell, the non-NR-U target frequency, the Rel. 15, the NR, and the frequency (band) to which channel sensing is not applied may be replaced with each other.

Different frame structures may be used at the NR-U target frequency and the NR target frequency.

The radio communication system (NR-U, LAA system) may comply with a first radio telecommunication specification (for example, NR, LTE, or the like) (may support the first radio telecommunication specification).

Other systems (coexistence system, coexistence apparatus) that coexist with this radio communication system and other radio communication apparatuses (coexistence apparatus) may comply with a second radio telecommunication specification (may support the second radio telecommunication specification), such as LTE, Wi-Fi, Bluetooth (registered trademark), WiGig (registered trademark), wireless Local Area Network (LAN), IEEE 802.11, Low Power Wide Area (LPWA), or the like, which is different from the first radio telecommunication specification, or may support the first radio telecommunication specification. The coexistence system may be a system that receives interference from the radio communication system or a system that gives interference with the radio communication system.

In the present disclosure, the transmission, the UL transmission, the UL signal, the physical uplink shared channel (PUSCH), the physical uplink control channel (PUCCH), the sounding reference signal (SRS), the uplink (UL)-reference signal (RS), the preamble, the random access channel (RACH), and the physical random access channel (PRACH) of the UE may be replaced with each other.

In the present disclosure, the transmission, the DL transmission, the DL signal, the physical downlink shared channel (PDSCH), the physical downlink control channel (PDCCH), the downlink (DL)-reference signal (RS), the demodulation reference signal (DMRS) for the PDCCH, and the DMRS for the PDSCH of the base station may be replaced with each other.

In the present disclosure, the node, the UE, the base station, the transmission/reception point (TRP), and the radio communication apparatus may be replaced with each other.

In the present disclosure, x or more and more than x (greater than x) may be replaced with each other. In the present disclosure, x or less and less than x (smaller than x) may be replaced with each other.

### (Radio Communication Method)

In the NR-U target frequency, among a plurality of gaps in one COT, a node that performs transmission after a gap of a given order (position, order) (a period allocated immediately after the gap) (a node scheduled to perform transmission after the gap) may determine whether or not to perform transmission on the basis of the LBT in the gap.

The given order may be N or more. N may be 2 (the gap of the given order may be the second and subsequent gaps). N may be 3 or more.

The LBT in the gap of the given order may be Category 2 LBT.

When the length of the gap is shorter than the length of the gap requiring LBT (the length of the gap corresponds to no-LBT transmission), the node that performs transmission after the gap of the order before the given order may perform transmission (no-LBT transmission) without performing LBT in the gap. The node may perform transmission without performing LBT in some gaps among a plurality of gaps in the COT and may perform transmission without performing LBT in the remaining gaps.

The length of each of the plurality of gaps in one COT may be shorter than the length of the gap requiring LBT (for example, 16 µs or more or more than 16 µs) (may be a length supporting no-LBT transmission (for example, less than 16 µs or 16 µs or less)). Even when the length of the gap of the given order is shorter than the length of the gap requiring LBT, the node may perform LBT in the gap.

In each of the plurality of gaps in one COT, a transmission node (transmission source) may be switched. In other words, in the COT, the transmission node before the gap may be different from a transmission node after the gap.

For example, the node A may be a base station, the node B may be UE #1, and a node C may be UE #2. The node A transmission may be at least one of a DL channel and a DL signal (for example, at least one of the PDSCH, the PDCCH, the PDSCH DMRS, and the PDCCH DMRS). The node B transmission and the node C transmission may be at least one of a UL channel and a UL signal (for example, at least one of the PUSCH, the PUCCH, the PUSCH DMRS, the PUCCH DMRS, and the SRS). At least one of the node B transmission and the node C transmission may be scheduled by the PDCCH in the node A transmission or the PDCCH before the TxOP.

Further, at least one of the node B and the node C may be a base station, and the other node may be UE.

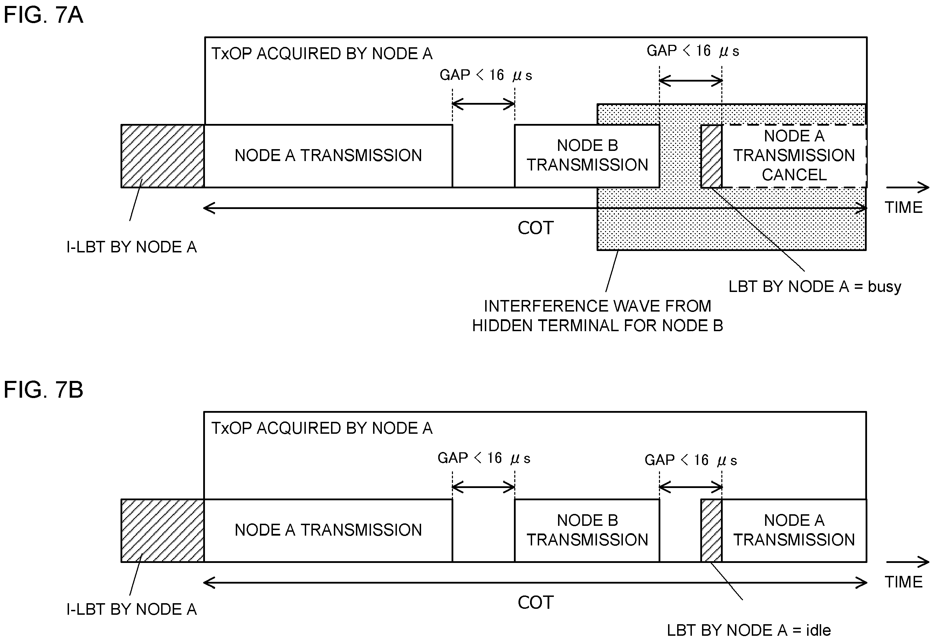

Figs. 7A and 7B are diagrams illustrating an example of COT sharing in which a DL node and a UL node are one-to-one.

In the example of Figs. 7A and 7B, it is assumed that gaps #1 and #2 having a length of less than 16 µs are arranged in COT acquired by the node A, and transmission of the node A at the start of the COT, transmission of the node B after gap #1, and transmission of the node A after gap #2 are scheduled.

At the start of the COT, the node A performs transmission. Then, the node B performs Category 2 LBT in gap #1, performs transmission when the LBT result is idle, and cancels the transmission when the LBT result is busy. Then, the node A performs Category 2 LBT in gap #2, performs transmission when the LBT result is idle, and cancels the transmission when the LBT result is busy.

Fig. 7A illustrates a case where a hidden terminal for the node B is close to the node A and performs transmission during transmission by the node B. When the LBT result of the node A in gap #2 is busy, interference from the node A with the hidden terminal can be prevented by the node A canceling the transmission.

Fig. 7B illustrates a case where a hidden terminal for the node B is close to the node A and does not perform transmission during transmission by the node B. When the LBT result of the node A in gap #2 is idle, the node A performs transmission.

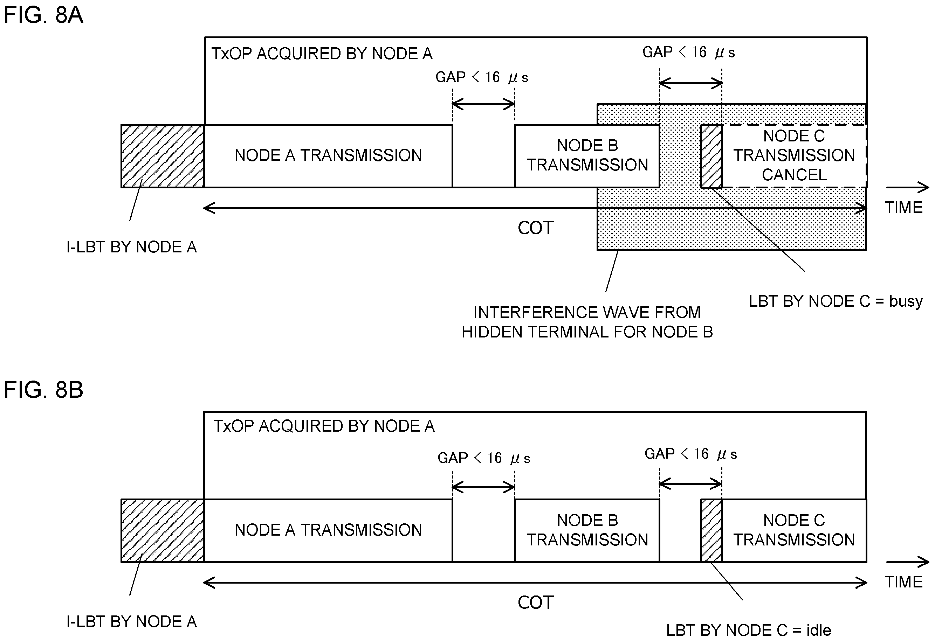

Figs. 8A and 8B are diagrams illustrating an example of COT sharing in which a DL node to a UL node are one-to-many.

In the example of Figs. 8A and 8B, it is assumed that gaps #1 and #2 having a length of less than 16 µs are arranged in COT acquired by the node A, and transmission of the node A at the start of the COT, transmission of the node B after gap #1, and transmission of the node C after gap #2 are scheduled.

At the start of the COT, the node A performs transmission. Then, the node B performs Category 2 LBT in gap #1, performs transmission when the LBT result is idle, and cancels the transmission when the LBT result is busy. Then, the node C performs Category 2 LBT in gap #2, performs transmission when the LBT result is idle, and cancels the transmission when the LBT result is busy.

Fig. 8A illustrates a case where a hidden terminal for the node B is close to the node C and performs transmission during transmission by the node B. When the LBT result of the node C in gap #2 is busy, interference from the node C with the hidden terminal can be prevented by the node C canceling the transmission.

Fig. 8B illustrates a case where a hidden terminal for the node B is close to the node C and does not perform transmission during transmission by the node B. When the LBT result of the node C in gap #2 is idle, the node C performs transmission.

N may be 1 (the gap of the given order may be all gaps). In this case, the node may perform LBT in all gaps in one COT.

According to the above embodiment, it is possible to reduce a loss of radio resources due to signal collision and increase radio resource utilization efficiency.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

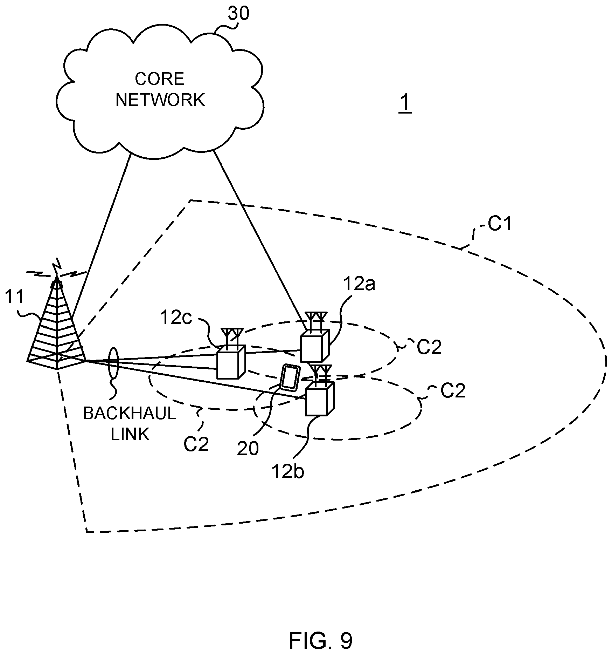

Fig. 9 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)) and dual connectivity between NR and LTE (NR-E-UTRA dual connectivity (NE-DC)).

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. User terminal 20 may be located in at least one cell. The arrangement, number, and the like of cells and the user terminal 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a downlink shared channel (physical downlink shared channel (PDSCH)) shared by each user terminal 20, a broadcast channel (physical broadcast channel (PBCH)), a downlink control channel (physical downlink control channel (PDCCH)), or the like may be used.

Further, in the radio communication system 1, as an uplink channel, an uplink shared channel (physical uplink shared channel (PUSCH)) shared by each user terminal 20, an uplink control channel (physical uplink control channel (PUCCH)), a random access channel (physical random access channel (PRACH)), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that the SS, the SSB, or the like may also be referred to as a reference signal.

Further, in the radio communication system 1, a measurement reference signal (sounding reference signal (SRS)), a demodulation reference signal (DMRS), and the like may be transmitted as an uplink reference signal (UL-RS). Note that, DMRS may be referred to as a user terminal-specific reference signal (UE-specific Reference Signal).

### (Base station)

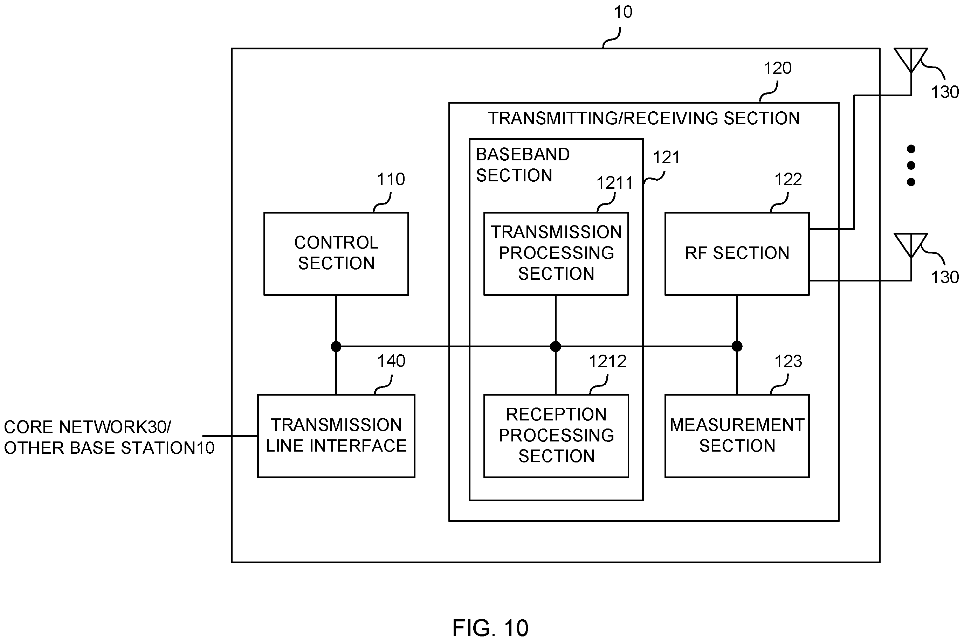

Fig. 10 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, or the like, which is described based on common recognition in the technical field to which the present disclosure relates.

The transmitting/receiving section 120 may be constituted as an integrated transmission/reception section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmission/reception antenna 130 can be constituted by an antenna, which is described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), or a signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may include at least one of the transmitting/receiving section 120 and the transmission/reception antenna 130.

Further, the transmitting/receiving section 120 may perform channel sensing (for example, Category 2 LBT) at a gap of a given order among a plurality of gaps in one transmission opportunity (for example, TxOP, COT). The control section 110 may determine whether or not to perform transmission after the gap of the given order on the basis of a result of the sensing.

### (User terminal)

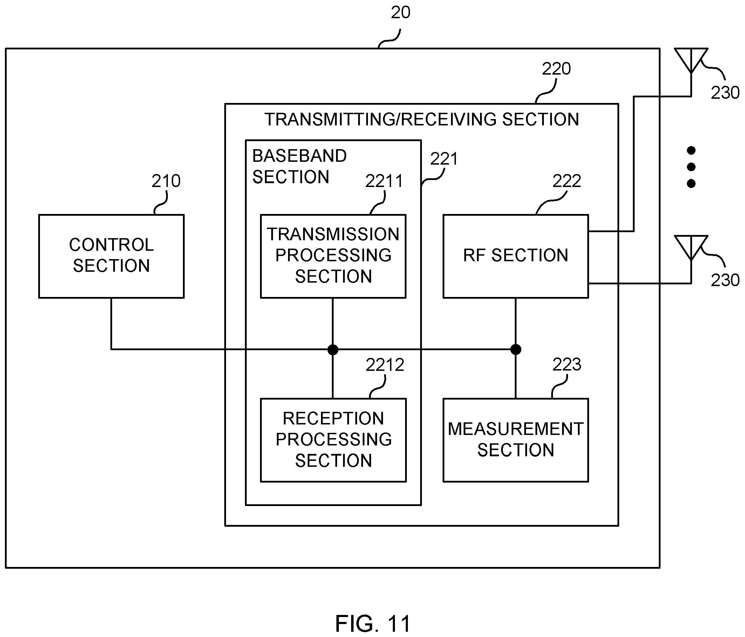

Fig. 11 is a diagram illustrating an example of a configuration of user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmission/reception circuit, or the like, which is described based on common recognition in the technical field to which the present disclosure relates.

The transmitting/receiving section 220 may be constituted as an integrated transmission/reception section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmission/reception antenna 230 can be constituted by an antenna, which is described based on common recognition in the technical field to which the present disclosure relates, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmitting/receiving section 220 (transmission processing section 2211) may perform transmission processing such as channel encoding (which may include error correcting encoding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) may not perform DFT processing as the transmission processing.

The transmitting/receiving section 220 (RF section 222) may perform modulation to a radio frequency band, filtering processing, amplification, and the like on the base band signal, and may transmit a signal in the radio frequency band via the transmission/reception antenna 230.

Meanwhile, the transmitting/receiving section 220 (RF section 222) may perform amplification, filtering processing, demodulation to a base band signal, and the like on the signal in the radio frequency band received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired base band signal.

The transmitting/receiving section 220 (measurement section 223) may perform measurement on the received signal. For example, the measurement section 223 may perform RRM measurement, CSI measurement, and the like based on the received signal. The measurement section 223 may measure received power (e.g., RSRP), received quality (e.g., RSRQ, SINR, or SNR), signal strength (e.g., RSSI), propagation path information (e.g., CSI), and the like.

The measurement result may be output to the control section 210.

Note that the transmission section and the reception section of the user terminal 20 in the present disclosure may include at least one of the transmitting/receiving section 220, the transmission/reception antenna 230, and the transmission line interface 240.

Further, the transmitting/receiving section 220 may perform channel sensing (for example, Category 2 LBT) at a gap of a given order among a plurality of gaps in one transmission opportunity (for example, TxOP, COT). The control section 210 may determine whether or not to perform transmission after the gap of the given order on the basis of a result of the sensing.

The given order may be two or more.

The length of each of the plurality of gaps may be shorter than a length of a gap requiring the channel sensing (for example, 16 µs or more and more than 16 µs).

The transmission source (for example, the transmission node) may be switched in each of the plurality of gaps.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, wireless, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

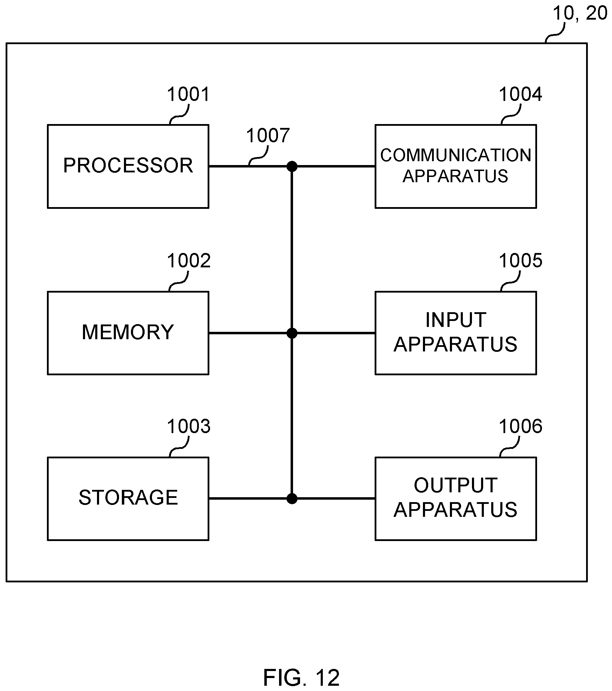

For example, the base station, the user terminal, and the like according to one embodiment of the present disclosure may function as a computer that executes the processing of the radio communication method of the present disclosure. Fig. 12 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is illustrated, a plurality of processors may be provided. Further, the processing may be executed by one processor, or the processing may be executed in sequence or using other different methods simultaneously by two or more processors. Note that the processor 1001 may be implemented with one or more chips.

Each of functions of the base station 10 and the user terminal 20 is implemented by causing given software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, running an operating system. As the processor 1001, provided may be a central processing unit (CPU) including an interface with peripheral equipment, a control device, an operation device, a register, and the like. For example, at least a part of the above-described control section 110(210), transmitting/receiving section 120(220), and the like may be implemented by the processor 1001.

Furthermore, the processor 1001 reads programs (program codes), software modules, or data, from at least one of the storage 1003 and the communication apparatus 1004, into the memory 1002, and executes various processing according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be constituted by, for example, at least one of a read only memory (ROM), an erasable programmable ROM (EPROM), an electrically EPROM (EEPROM), a random access memory (RAM) and/or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmitting/receiving device) for allowing inter-computer communication by using at least one of a wired network and a wireless network, and may be referred to as, for example, a network device, a network controller, a network card, a communication module, and the like. The communication apparatus 1004 may be constituted by a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating a transmitting section 120a (220a) and a receiving section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (e.g., a display, a speaker, a light emitting diode (LED) lamp, and the like). Note that the input apparatus 1005 and the output apparatus 1006 may be provided in an integrated configuration (for example, a touch panel).

Further, the apparatuses such as the processor 1001 and the memory 1002 are connected by the bus 1007 for communicating information. The bus 1007 may be configured with a single bus, or may be configured with different buses between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be read interchangeably. Further, the signal may be a message. The reference signal can be abbreviated as an RS, and may be referred to as a pilot, a pilot signal and the like, depending on which standard applies. Furthermore, a component carrier (CC) may be referred to as a cell, a frequency carrier, a carrier frequency, and the like.

A radio frame may include one or a plurality of periods (frames) in a time domain. Each of the one or plurality of periods (frames) constituting the radio frame may be referred to as a "subframe". Furthermore, a subframe may include one or a plurality of slots in the time domain. A subframe may be a fixed time duration (for example, 1 ms) that is not dependent on numerology.

Here, numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may be constituted by one or a plurality of symbols in the time domain (orthogonal frequency division multiplexing (OFDM) symbols, single carrier frequency division multiple access (SC-FDMA) symbols, and the like). Further, the slot may be a time unit based on numerology.

A slot may include a plurality of mini slots. Each mini slot may include one or a plurality of symbols in the time domain. Further, the mini slot may be referred to as a subslot. Each mini slot may include fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot and a symbol all represent the time unit in signal transmission. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (e.g., one to thirteen symbols), or may be a period longer than 1 ms. Note that the unit to represent the TTI may be referred to as a slot, a mini slot or the like, instead of a subframe.

Here, the TTI refers to, for example, the minimum time unit of scheduling in radio communication. For example, in the LTE system, a base station performs scheduling to allocate radio resources (a frequency bandwidth and transmission power that can be used in each user terminal and the like) to each user terminal in TTI units. Note that the definition of TTI is not limited thereto.

The TTI may be the transmission time unit of channel-encoded data packets (transport blocks), code blocks, codewords, or the like, or may be the unit of processing in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Further, the number of slots (the number of mini slots) constituting the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (for example, a usual TTI, a subframe, or the like) may be replaced with a TTI having a time length exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on the numerology.

Further, the RB may include one or a plurality of symbols in the time domain, and may have a length of one slot, one mini slot, one subframe, or one TTI. One TTI, one subframe, and the like each may be constituted by one or a plurality of resource blocks.

Note that one or a plurality of RBs may be referred to as a physical resource block (PRB (Physical RB)), a subcarrier group (SCG (Sub-Carrier Group)), a resource element group (REG), a PRB pair, an RB pair, or the like.

Furthermore, a resource block may be constituted by one or a plurality of resource elements (REs). For example, one RE may be a radio resource area of one subcarrier and one symbol.

A bandwidth part (BWP) (which may be referred to as a partial bandwidth or the like) may represent a subset of consecutive common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that a "cell", a "carrier", or the like in the present disclosure may be replaced with the "BWP".

Note that the structures of radio frames, subframes, slots, mini slots, symbols and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, a radio resource may be instructed by a given index.

The names used for parameters and the like in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols, chips, and the like all of which may be referenced throughout the above-described description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, a signal, and the like may be input/output via a plurality of network nodes.

The information, signals, and the like that are input and output may be stored in a specific location (for example, in a memory), or may be managed using a management table. The information, signal, and the like to be input and/or output can be overwritten, updated or appended. The output information, signal, and the like may be deleted. The information, signals, and the like that are input may be transmitted to another apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, a notification of MAC signaling may be given using, for example, MAC control elements (MAC control elements (CEs)).

Further, a notification of given information (for example, notification of "being X") is not limited to explicit notification but may be performed implicitly (for example, by not performing notification of the given information or by performing notification of another piece of information).

Decisions may be made in values represented by one bit (0 or 1), may be made in Boolean values that represent true or false, or may be made by comparing numerical values (for example, comparison against a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When a base station accommodates a plurality of cells, the entire coverage area of the base station can be partitioned into a plurality of smaller areas, and each smaller area can provide communication service through base station subsystems (e.g., indoor small base stations (remote radio heads (RRHs))). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmitting apparatus, a receiving apparatus, a radio communication apparatus, and the like. Note that at least one of the base station and the mobile station may be a device mounted on a moving object, a moving object itself, and the like. The moving object may be a transportation (for example, a car, an airplane and the like), an unmanned moving object (for example, a drone, an autonomous car, and the like), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of pieces of user terminal (which may be referred to as, for example, device-to-device (D2D), vehicle-to-everything (V2X), and the like). In the case, the user terminal 20 may have the function of the above-mentioned base station 10. In addition, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, the operation performed by the base station may be performed by an upper node thereof in some cases. In a network including one or a plurality of network nodes with base stations, it is clear that various operations performed for communication with a terminal can be performed by a base station, one or a plurality of network nodes (examples of which include but are not limited to mobility management entity (MME) and serving-gateway (S-GW)) other than the base station), or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "on the basis of" as used in the present disclosure does not mean "on the basis of only", unless otherwise specified. In other words, the phrase "based on" means both "based only on" and "based at least on".

Any reference to an element using designations such as "first" and "second" used in the present disclosure does not generally limit the amount or order of these elements. These designations may be used in the present disclosure only for convenience, as a method for distinguishing between two or more elements. Therefore, reference to the first and second elements does not mean that only two elements are adoptable, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, "determining" may be regarded as "determining" of receiving (for example, receiving of information), transmitting (for example, transmitting of information), input, output, accessing (for example, accessing to data in a memory), and the like.

Further, "determining" may be regarded as "determining" of resolving, selecting, choosing, establishing, comparing, and the like. In other words, "determining" may be regarded as "determining" of a certain operation.

Further, "determining" may be replaced with "assuming", "expecting", "considering", and the like.

The "maximum transmission power" described in the present disclosure may mean a maximum value of transmission power, a nominal maximum transmission power (nominal UE maximum transmit power), or a rated maximum transmission power (rated UE maximum transmit power).

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided for the purpose of exemplification and explanation, and has no limitative meaning to the invention according to the present disclosure.

This application is based on Japanese Patent Application No. 2019-086606 filed on April 10, 2019. The contents of this are all incorporated herein.

## Claims

1. User terminal comprising:
a receiving section configured to perform sensing of a channel in a gap of a given order among a plurality of gaps in one transmission opportunity; and
a control section configured to determine whether or not to perform transmission after the gap of the given order based on a result of the sensing.

2. The user terminal according to claim 1, wherein the given order is two or more.

3. The user terminal according to claim 1 or 2, wherein a length of each of the plurality of gaps is shorter than a length of a gap that requires sensing of the channel.

4. The user terminal according to any of claims 1 to 3, wherein a transmission source is switched in each of the plurality of gaps.

5. A radio communication method of user terminal, the method comprising:
a step of performing sensing of a channel in a gap of a given order among a plurality of gaps in one transmission opportunity; and
a step of determining whether or not to perform transmission after the gap of the given order based on a result of the sensing.

6. A base station comprising:
a reception section configured to perform sensing of a channel in a gap of a given order among a plurality of gaps in one transmission opportunity; and
a control section configured to determine whether or not to perform transmission after the gap of the given order based on a result of the sensing.
